# FASCICULE DE BREVET EUROPEEN

(11) **EP 1 615 310 B1**
(45) Date de publication et mention de la délivrance du brevet: **27.06.2007**
(21) Numéro de dépôt: 05291165.8
(22) Date de dépôt: 31.05.2005
(51) Int. Cl.: H02G 3/06

(54) **Accessoire d'angle pour goulotte**
Winkelzubehörelement für Führungskanal
Angle accessory for duct

(30) Priorité: 09.07.2004 FR 0407693
(43) Date de publication de la demande: 11.01.2006
(73) Titulaire: LEGRAND FRANCE, 87000 Limoges (FR); LEGRAND SNC, 87000 Limoges (FR)
(72) Inventeur: Jadaud, Alain, 72240 Tennie (FR)
(74) Mandataire: Orsini, Fabienne

(56) Documents cités:
- EP-A- 0 734 107
- FR-A- 2 825 527

## Description

### DOMAINE TECHNIQUE AUQUEL SE RAPPORTE L'INVENTION

La présente invention concerne, de manière générale, les goulottes du type de celles mises en oeuvre, par exemple, pour le support, le logement et la protection de divers appareillages, et en particulier de divers appareillages électriques, aussi bien que pour le support, le logement, et la protection des conducteurs ou des canalisations nécessaires à la desserte de ces appareillages.

Elle concerne plus particulièrement un accessoire d'angle comportant une joue destinée à établir une continuité de parois entre deux ailes latérales de deux socles de goulotte disposés selon deux orientations différentes, ladite joue portant des moyens de réception qui s'étendent selon un arc de cercle donné et qui sont destinés à recevoir des moyens de montage d'un tronçon de couvercle adapté à fermer lesdits socles pour permettre la fermeture de l'angle formé entre lesdits socles et d'une partie de ces derniers par un seul tronçon de couvercle sans interruption ni arête ou pliure dans ledit angle.

### ARRIERE-PLAN TECHNOLOGIQUE

On connaît déjà notamment du document FR 2 825 527 appartenant aux demanderesses, un accessoire d'angle du type précité comprenant deux éléments différents, à savoir un élément d'extrémité et un élément de base, montés à pivotement l'un sur l'autre de sorte qu'ils sont aptes à être positionnés selon différentes positions angulaires relatives.

En outre, dans l'accessoire d'angle décrit dans ce document, il est prévu des moyens de blocage débrayables, constitués d'une série de crans et d'une dent pivotante, coopérant entre eux pour bloquer en position angulaire l'élément d'extrémité et l'élément de base l'un par rapport à l'autre.

Outre que cet accessoire d'angle est relativement complexe, il présente comme inconvénient majeur qu'il demande plusieurs interventions de l'installateur pour être monté sur les socles de goulotte.

En effet, après avoir mis en place l'accessoire sur les socles de goulotte, l'installateur doit débrayer les moyens de blocage pour ajuster la position angulaire relative des deux éléments de l'accessoire à l'angle formé entre lesdits socles puis bloquer en position les éléments de base et d'extrémité de cet accessoire à l'aide desdits moyens de blocage pour que l'accessoire monté sur lesdits socles présente une certaine tenue mécanique et que l'installation soit conforme aux normes notamment d'étanchéité.

Sur les chantiers, ces opérations sont fastidieuses pour l'installateur.

### OBJET DE L'INVENTION

Afin de remédier aux inconvénients de l'état de la technique, la présente invention propose un accessoire d'angle tel que défini en introduction qui est simple de réalisation et qui, lors de sa mise en place, s'adapte automatiquement à l'angle formé entre les socles de goulotte sur lesquels il est monté.

Plus particulièrement, l'accessoire d'angle selon l'invention est caractérisé en ce que ladite joue est une pièce monobloc qui comprend deux parties qui se chevauchent partiellement et qui sont articulées entre elles par une zone formant charnière.

D'autres caractéristiques avantageuses et non limitatives de l'accessoire d'angle selon l'invention sont les suivantes :
- il comporte une autre joue formée d'une pièce monobloc comprenant deux parties se chevauchant partiellement et articulées entre elles par une zone formant charnière, cette autre joue destinée à établir une continuité de parois entre deux cloisons de fractionnement supportées par les fonds desdits socles, portant des moyens de réception qui s'étendent selon un arc de cercle donné et qui sont destinés à recevoir des moyens de montage de tronçons de couvercle adaptés à fermer des compartiments desdits socles pour permettre la fermeture de l'angle formé entre lesdits socles et d'une partie de chaque couple de compartiments aboutés desdits socles par un seul tronçon de couvercle sans interruption ni arête ou pliure dans ledit angle ;
- ladite zone formant charnière est une zone de faible épaisseur située dans le bord avant de ladite joue destinée à établir une continuité de bords entre les bords avant desdits socles ;
- lesdites parties portent sur leur face interne tournée vers les socles des moyens de guidage d'une partie par rapport à l'autre ;
- lesdits moyens de guidage comprennent, d'une part, une rainure prévue en creux dans ladite face interne d'une des parties et, d'autre part, une languette portée en saillie de ladite face interne de l'autre partie, adaptée à s'engager dans ladite rainure ;
- la rainure et la languette sont agencées de manière que ladite languette est apte à être retenue dans ladite rainure pour maintenir en position lesdites parties l'une par rapport à l'autre ;
- les parties portent sur leur face interne tournée vers les socles des moyens de montage sur lesdits socles ;
- lesdits moyens de montage comprennent pour chaque partie une languette d'encliquetage destinée à s'accrocher sur un bourrelet d'encliquetage correspondant d'une aile latérale ou d'une cloison de fractionnement d'un des socles ;
- lesdits moyens de montage comprennent pour chaque partie une languette d'engagement destinée à s'engager dans une rainure formée à l'extrémité d'un retour d'une aile latérale ou d'une cloison de fractionnement d'un des socles ;
- lesdits moyens de réception comprennent deux rebords associés respectivement aux deux parties ;
- lesdits moyens de réception comprennent une rainure d'engagement associée respectivement aux deux parties de la joue ;
- une desdites parties de chaque joue est une partie d'extrémité destinée à s'engager sur une aile latérale ou sur une cloison de fractionnement d'un desdits socles de façon à couvrir le bord coupé de cette dernière, l'autre desdites parties de chaque joue constitue d'une part, une partie d'extrémité destinée à s'engager sur une aile latérale ou sur une cloison de fractionnement de l'autre socle de façon à couvrir le bord coupé de cette dernière, et d'autre part, une partie centrale chevauchant l'autre partie d'extrémité dans une zone avoisinant la bissectrice de l'angle formé entre les bords arrières dudit accessoire ;
- ladite partie centrale présente une épaisseur inférieure, de l'ordre de la moitié de celle des parties d'extrémité ;
- chaque joue est réalisée par moulage d'une seule matière plastique ;
- l'accessoire comprend deux joues identiques destinées chacune à établir une continuité de parois entre deux ailes latérales desdits socles ; et
- les deux joues identiques de l'accessoire sont solidaires d'un fond assurant une continuité de fond entre les fonds desdits socles.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique de dessus d'une joue en sortie de moulage de l'accessoire d'angle selon l'invention ;
- la figure 2 est une vue schématique de dessus de la joue de la figure 1 dans la configuration d'angle à 90 degré ;
- les figures 3A et 3B sont respectivement les vues schématiques arrières des figures 1 et 2 ;
- la figure 4 est une vue partielle en perspective de côté de la joue de la figure 1 sur laquelle est rapporté un tronçon de couvercle ;
- la figure 5 est une vue schématique en coupe selon le plan A-A de la figure 3A ;
- les figures 6A et 6B représentent des vues de deux côtés opposés d'une autre joue de l'accessoire d'angle selon l'invention, et ;
- les figures 7A à 7C montrent la mise en place de l'accessoire d'angle selon l'invention entre deux tronçons de goulotte formant un angle intérieur.

Sur les figures, on a représenté un accessoire d'angle utilisé pour établir la liaison entre deux tronçons de goulotte coupés et positionnés bout à bout pour former ici un angle intérieur.

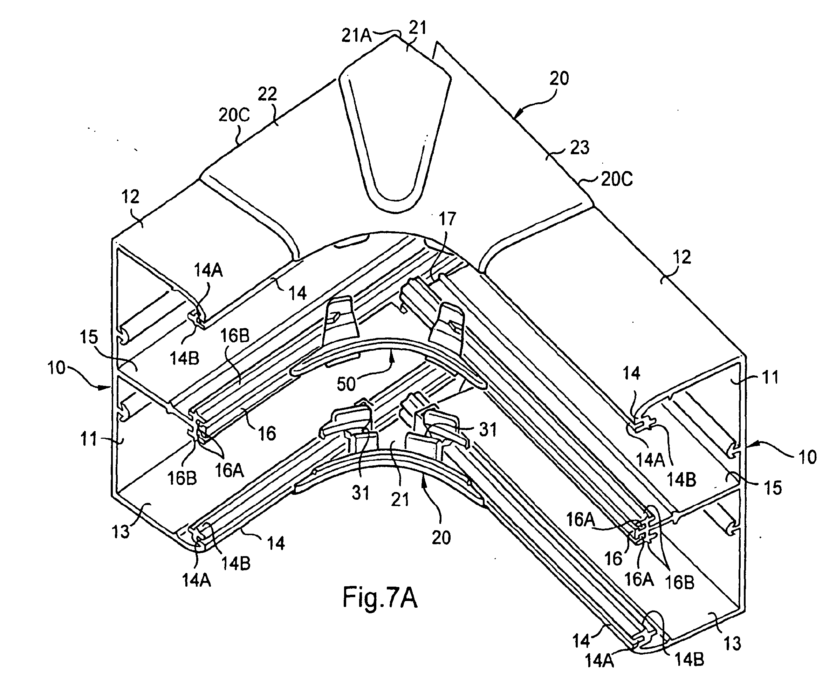

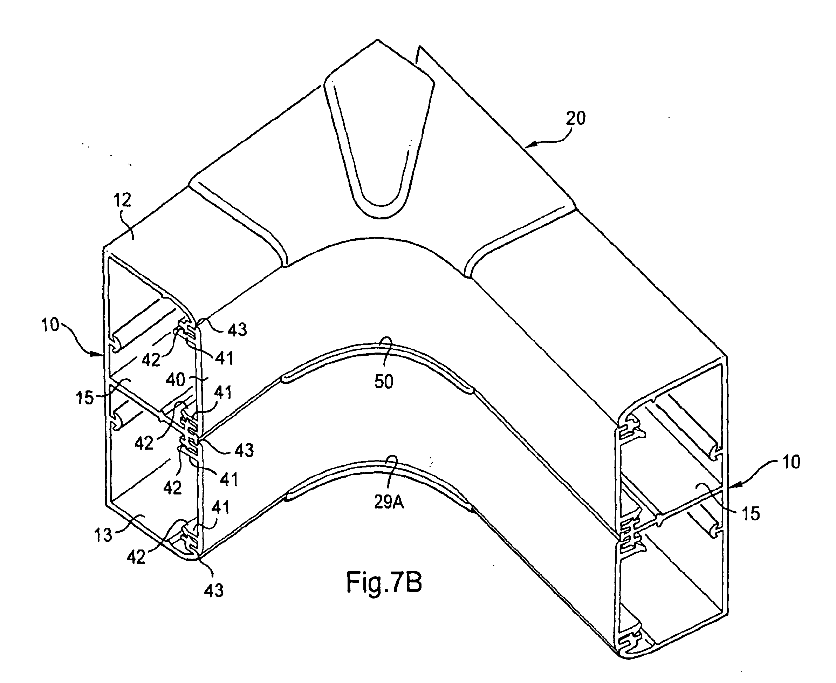

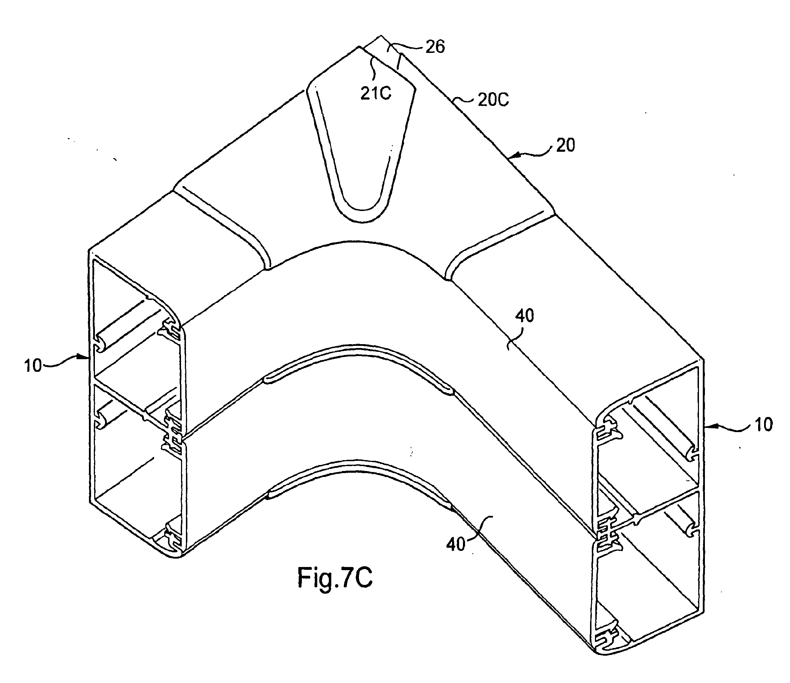

Comme le montrent plus particulièrement les figures 7A à 7C, les deux tronçons de goulotte sont identiques et comprennent chacun, pour l'essentiel, un socle 10 présentant une section en U, pourvu d'un fond 11 et de deux ailes latérales 12, 13 dont les retours 14, dirigés l'un vers l'autre, comportent des moyens de montage de tronçon de couvercle 40 (voir figure 7B) de fermeture des compartiments du socle 10.

Les socles 10 sont préférentiellement réalisés par moulage d'une matière plastique.

Ici, les moyens de montage des tronçons de couvercle 40 comprennent, pour chaque retour 14, des moyens d'engagement constitués par une rainure 14A et, à l'extérieur de chaque rainure 14A, à proximité de son fond, un bourrelet d'encliquetage 14B, chaque bourrelet d'encliquetage 14B courant le long de chaque rainure 14A.

En outre, ici, chaque socle 10 comporte intérieurement une cloison de fractionnement 15 séparant son volume en deux compartiments. Chaque cloison de fractionnement 15 porte en tête deux retours 16 dirigés l'un à l'opposé de l'autre dans lequel il est prévu également des moyens de montage d'un tronçon de couvercle 40 de sorte que chaque compartiment intérieur de chaque socle est fermé par un tronçon de couvercle 40 qui se monte, d'une part, sur une aile latérale 12, 13 du socle 10, et, d'autre part, sur la cloison de fractionnement 15 de ce socle 10. Les moyens de montage des retours 16 de chaque cloison de fractionnement 15 sont identiques à ceux prévus sur les retours des ailes latérales 12, 13 du socle 10. Ils comprennent une rainure 16A et à l'extérieur de chaque rainure 16A, à proximité de son fond, un bourrelet d'encliquetage 16B qui court le long de celle-ci.

Comme le montre plus particulièrement la figure 7B, en correspondance des moyens de montage 14A, 14B, 16A, 16B du tronçon de couvercle prévus sur le socle 10 de goulotte, chaque tronçon de couvercle 40 comporte, à proximité de chacun de ses bords d'extrémité longitudinaux, une série de languettes d'engagement 43, chaque série de languettes d'engagement 43 s'étendant le long de chaque bord d'extrémité longitudinal et chaque languette d'engagement 43 s'étendant elle, perpendiculairement au plan du tronçon de couvercle 40.

Chaque série de languettes d'engagement 43 est destinée à s'engager dans chaque rainure 14A formée à l'extérieur de chaque retour 14 de chaque aile 12, 13 de chacun des socles 10, ainsi que dans chaque rainure 16A formée à l'extrémité de chaque retour 16 de la cloison de fractionnement 15 portée par le fond 11 de chaque socle 10.

En outre, chaque tronçon de couvercle 40 de fermeture comporte, du côté intérieur de chaque série de languettes d'engagement 43, et à proximité de celle-ci, une série de languettes d'encliquetage 41. Chaque série de languettes d'encliquetage 41 s'étend parallèlement à chaque série de languettes d'engagement 43 et perpendiculairement au plan du tronçon de couvercle 40.

Chaque languette d'encliquetage 41 comporte, à son extrémité libre, une dent d'encliquetage 42. Cette dent d'encliquetage 42 est destinée à s'accrocher sur chaque bourrelet d'encliquetage 14B, 16B correspondant de chaque aile latérale 12, 13 et de la cloison de fractionnement 15 d'un socle 10.

Chaque tronçon de couvercle 40 ainsi agencé, tel que représenté sur la figure 7B, présente une certaine flexibilité pour pouvoir être adapté à une configuration de rainure et de bourrelet d'encliquetage présentant un trajet courbe selon un rayon de courbure déterminé.

Chaque tronçon de couvercle 40 est alors réalisé avantageusement en matière plastique.

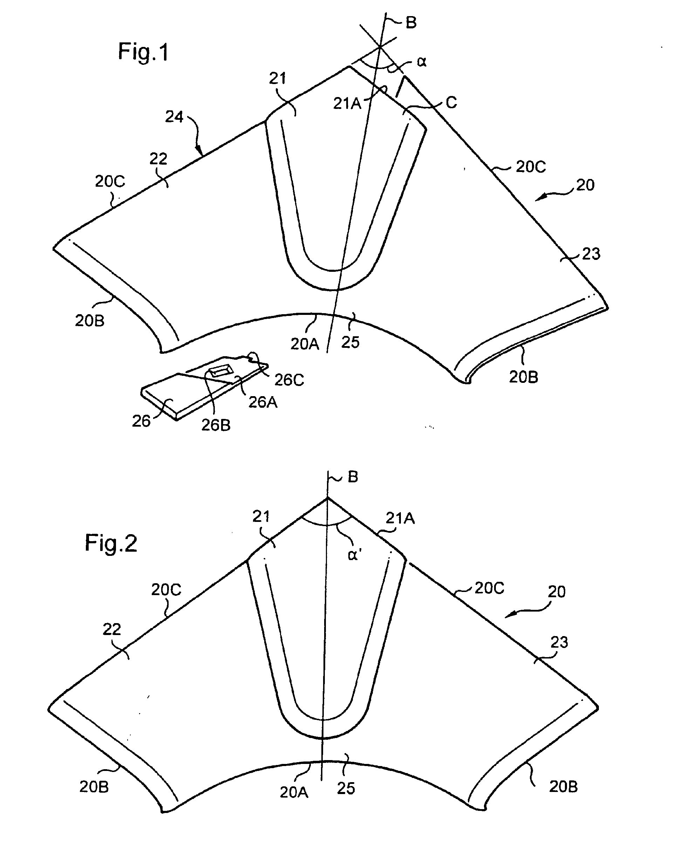

L'accessoire d'angle représenté sur les figures 1 à 5 comprend avantageusement une joue 20 destinée à établir une continuité de parois entre deux ailes latérales 12, 13 desdits socles 10 aboutés.

Ici, les socles 10 ne sont pas coupés à l'onglet, mais sont coupés droit et un bord d'extrémité coupé 17 d'un des socles 10 est positionné contre l'autre socle 10.

En fait, l'accessoire d'angle comporte deux joues 20 identiques, chacune des joues étant destinée à établir une continuité de parois entre deux ailes latérales 12, 13 juxtaposées des deux socles 10 aboutés comme le montre plus particulièrement la figure 7A.

Préférentiellement, selon l'invention, chaque joue 20 est une pièce monobloc qui comporte deux parties 23, 24 qui se chevauchent partiellement et qui sont articulées entre elles par une zone 25 formant charnière.

Une desdites parties 23 de chaque joue 20 est une partie d'extrémité destinée à s'engager sur une aile latérale 12, 13 d'un desdits socles 10 de façon à couvrir le bord coupé de cette dernière. L'autre desdites parties 24 de chaque joue 20 constitue d'une part, une partie d'extrémité 22 destinée à s'engager sur une aile latérale 12, 13 de l'autre socle 10 de façon à couvrir le bord coupé de cette dernière, et d'autre part, une partie centrale 21 chevauchant l'autre partie d'extrémité 23 dans une zone C avoisinant la bissectrice B de l'angle ∝, ∝' formé entre les bords arrières 20C de ladite joue 20.

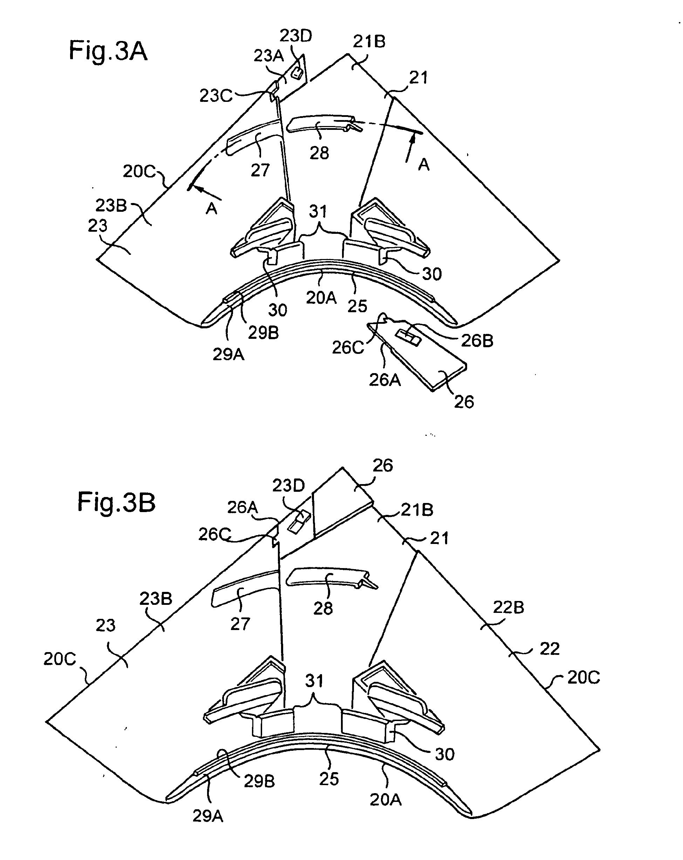

Comme le montrent plus particulièrement les figures 3A et 3B la partie centrale 21 de la joue 20 présente une épaisseur inférieure, de l'ordre de la moitié de celle des parties d'extrémité 22, 23.

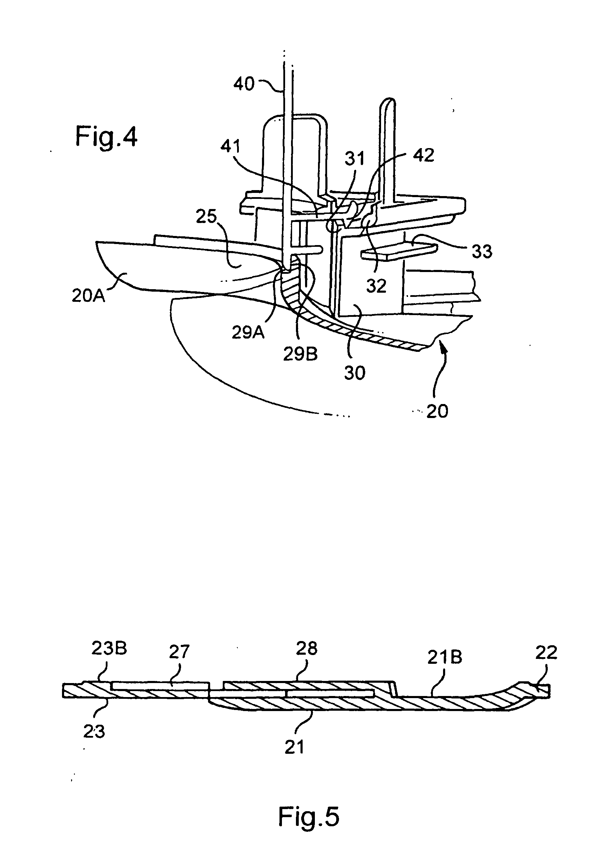

La joue 20 représentée sur les figures 1 à 5 comporte un bord avant 20A arrondi qui établit la jonction entre les bords avant correspondants des ailes latérales 12, 13, des socles 10 des tronçons de goulotte. Le bord avant 20A de la joue 20 porte une rainure 29A, 29B qui accueille un bord longitudinal d'un tronçon de couvercle 40 (voir figure 4). Les bords arrière 20C et le bord avant 20A de la joue 20 sont joints par les bords droits latéraux 20B.

Avantageusement, la zone 25 formant charnière d'articulation des deux parties 23, 24 de la joue 20 est une zone de faible épaisseur située dans le bord avant 20A de la joue, au niveau de la partie centrale 21 (c'est-à-dire entre les deux parties 23, 24).

Selon une autre caractéristique avantageuse de la joue 20 représentée sur les figures 1 à 5, elle porte des moyens de réception qui s'étendent selon un arc de cercle donné et qui sont destinés à recevoir des moyens de montage d'un tronçon de couvercle 40 adapté à fermer les socles 10 pour permettre la fermeture de l'angle formé entre lesdits socles 10 et d'une partie de ces derniers par un seul tronçon de couvercle sans interruption ni arrêtes ou pliures dans ledit angle comme le montre plus particulièrement la figure 7B.

Ici, comme le montrent plus particulièrement les figures 3A, 3B et 4, ces moyens de réception comprennent deux rebords 31 associés respectivement aux deux parties 23, 24 de la joue 20. Un des rebords 31 est prévu à l'extrémité d'une nervure 30 s'étendant perpendiculairement à la face interne 22B, tournée vers les socles 10, d'une partie d'extrémité 22 de la joue 20, et l'autre rebord 31 est prévu à l'extrémité d'une autre nervure 30 s'étendant perpendiculairement à la face interne 23B, tournée vers les socles 10, de l'autre partie d'extrémité 23 de la joue 20.

Ainsi, comme le montre plus particulièrement la figure 4, les dents d'encliquetage 42 prévues à l'extrémité des languettes d'encliquetage 41 du tronçon de couvercle 40 correspondant sont aptes à s'accrocher derrière le rebord 31 correspondant de la joue 20. Cet accrochage permet de maintenir le tronçon de couvercle 40 en position dans l'angle formé entre lesdits socles 10.

En outre, comme le montrent plus particulièrement les figures 3A, 3B et 4, avantageusement les deux parties 23, 24 articulées entre elles de la joue 20 portent sur leur face interne 23B, 22B tournée vers les socles 10, des moyens de montage sur lesdits socles 10.

Ici, ces moyens de montage comprennent pour chaque partie 23, 24 de la joue 20, d'une part, une languette d'encliquetage 32 destinée à s'accrocher sur un bourrelet d'encliquetage 14B correspondant d'une aile latérale 12, 13 d'un des socles 10, et, d'autre part une languette d'engagement 33 destinée à s'engager dans une rainure 14A formée à l'extrémité d'un retour 14 d'une aile latérale 12, 13 d'un des socles 10.

Ces moyens de montage de la joue 20 sur lesdits socles 10 sont similaires au moyen de montage de chaque tronçon de couvercle 40 sur lesdits socles 10. Ces moyens de montage 32, 33 sont prévus à l'arrière desdites nervures 30 qui portent à l'avant lesdits rebords 31.

Par ailleurs, selon une caractéristique préférentielle de chaque joue 20 de l'accessoire d'angle selon l'invention, lesdites parties 23, 24 de ladite joue 20 porte sur leur face interne, tournée vers les socles, des moyens de guidage d'une partie 23 par rapport à l'autre 24.

Ce guidage intervient lorsque les deux parties 23, 24 sont déplacées l'une par rapport à l'autre pour adapter ladite joue 20 à un angle juste supérieur à 80 degrés formé entre les socles 10 de goulotte.

Ici, comme le montrent les figures 3A, 3B, et 5, ces moyens de guidage comprennent, d'une part, une rainure 27 prévue en creux dans la face interne 23B de la partie d'extrémité 23 de ladite joue 20, et, d'autre part, une languette 28 portée en saillie de la face interne 21B de ladite partie centrale 21, adaptée à s'engager dans ladite rainure 27. La rainure 27 et la languette 28 sont agencées de manière que ladite languette 28 est apte à être retenue dans ladite rainure 27, ici par friction, pour maintenir en position lesdites parties 23, 24 l'une par rapport à l'autre.

Comme le montrent les figures 1 et 2, grâce à l'articulation des deux parties 23, 24 de la joue 20 entre elles, chaque joue 20 de l'accessoire d'angle selon l'invention peut être adaptée automatiquement à un angle variant, par exemple, entre 80 et 100 degrés formé entre les socles 10 de goulotte.

Chaque joue 20 issue de moulage se présente dans la configuration représentée sur la figure 1, dans laquelle les bords arrière 20C de la joue 20 forment entré eux un angle ∝ de l'ordre de 80 degrés. Dans cette configuration, il existe un décalage entre le bord oblique 21A de la partie centrale 21 de la joue 20 et le bord arrière 20C situé du côté de la partie d'extrémité 23 de la joue 20. Ce décalage crée un jour qui, lorsque la joue 20 s'adapte à un angle de 80 degrés, est comblé par l'installateur par une pièce 26 rapportée sur ladite partie centrale 21. Cette pièce 26 se présente sous la forme d'une languette comportant un décrochement 26A pourvu d'un orifice 26B destiné à venir s'accrocher sur une saillie 23D prévue sur la face interne 23A, d'un décrochement correspondant de la face interne 23B de la partie d'extrémité 23 de la joue 20. En outre, la pièce 26 comporte une languette 26C de positionnement destinée à venir se loger dans un logement complémentaire 23C prévu en correspondance sur la face interne 23B de la partie d'extrémité 23 à la jonction avec la partie centrale 21.

Dans la configuration d'angle à 90 degrés de la joue 20 représentée sur la figure 2, le bord oblique 21A de la partie centrale 21 de la joue vient s'aligner avec le bord arrière 20C situé du côté de la partie d'extrémité 23 de la joue 20 et il n'y a plus de jour à combler par la pièce 26 qui n'est pas utilisée.

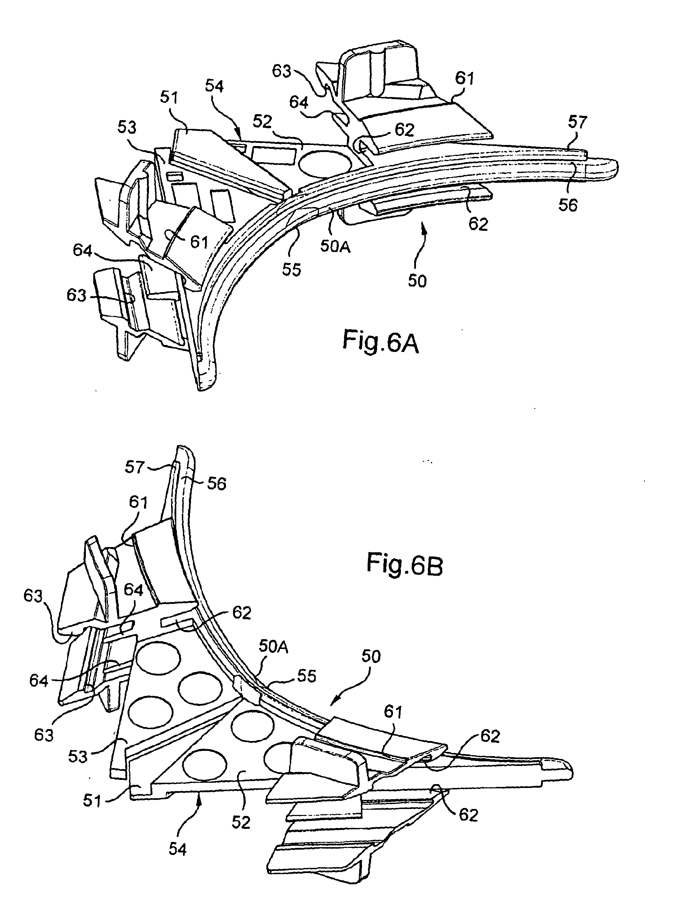

Sur les figures 6A et 6B on a représenté une autre joue 50 de l'accessoire d'angle selon l'invention. Cette autre joue 50 est destinée à établir une continuité de parois entre les deux cloisons de fractionnement 15 des socles 10.

Cette autre joue 50 est également une pièce monobloc comportant deux parties 53, 54 se chevauchant partiellement et articulées entre elles par une zone 55 formant charnière. Une des partie 54 forme une partie d'extrémité 52 et la partie centrale 51 de la joue 50 et l'autre partie 53 forme l'autre partie d'extrémité de la joue 50.

Ici également, la zone 55 formant charnière d'articulation des deux parties de la joue 50 est une zone de faible épaisseur située au milieu du bord avant 50A arrondi de cette autre joue 50.

Le bord avant 50A arrondi de cette autre joue 50 qui est destiné à établir une continuité entre les bords de tête des cloisons de fractionnement 15 comporte également une rainure 57, 56 contre laquelle s'appuie un bord longitudinal d'un tronçon de couvercle 40 adapté à fermer un des compartiments de chaque socle 10.

Cette autre joue 50 porte des moyens de réception qui s'étendent selon un arc de cercle donné qui sont destinés à recevoir les moyens de montage des tronçons de couvercle 40 adapté à fermer les compartiments desdits socles pour permettre la fermeture de l'angle formé entre les socles 10 et d'une partie de chaque couple de compartiments aboutés des socles 10 par un seul tronçon de couvercle 40 sans interruption ni pliure dans l'angle, comme le montre la figure 7B.

Cette autre joue 50 comporte, avantageusement, sur chacune de ses faces, des moyens de montage d'un tronçon de couvercle ainsi que des moyens de montage sur lesdits socles, ces moyens de montage étant associés à chacune de ses parties articulées.

Les moyens de montage des tronçons de couvercle 40 comprennent pour chaque partie 53, 54 une rainure 62 dans laquelle viennent se positionner des languettes d'engagement 43 du tronçon de couvercle 40 correspondant et un bourrelet d'encliquetage 61 sur lequel s'accroche les dents d'encliquetage 42 prévues à l'extrémité des languettes d'encliquetage 41 du tronçon de couvercle 40.

En outre, les moyens de montage de l'autre joue 50 sur les socles 10 de goulotte comprennent, sur chaque face et pour chaque partie 53, 54, une dent d'encliquetage 63 ainsi qu'une languette d'engagement 64. Chaque dent d'encliquetage 63 est destinée à s'accrocher sur un bourrelet d'encliquetage 16B prévu sur un des retours 16 des cloisons de fractionnement 15 et chaque languette d'engagement 64 est destinée à s'engager dans la rainure 16A correspondante de la cloison de fractionnement 15 correspondante du socle 10.

Avantageusement, chaque joue 20, 50 de l'accessoire d'angle selon l'invention, est réalisée par moulage d'une seule matière plastique.

La présente invention n'est nullement limitée aux modes de réalisation décrits et représentés, mais l'homme du métier saura y apporter toute variante conforme à son esprit.

## Revendications

1. Accessoire d'angle comportant une joue (20) destinée à établir une continuité de parois entre deux ailes latérales (12, 13) de deux socles (10) de goulotte disposés selon deux orientations différentes, ladite joue (20) portant des moyens de réception (31) qui s'étendent selon un arc de cercle donné et qui sont destinés à recevoir des moyens de montage (42) d'un tronçon de couvercle (40) adapté à fermer lesdits socles (10) pour permettre la fermeture de l'angle formé entre lesdits socles (10) et d'une partie de ces derniers par un seul tronçon de couvercle (40) sans interruption ni arête ou pliure dans ledit angle, **caractérisé en ce que** ladite joue (20) est une pièce monobloc qui comprend deux parties (23, 24) qui se chevauchent partiellement et qui sont articulées entre elles par une zone (25) formant charnière.

2. Accessoire d'angle selon la revendication 1, **caractérisé en qu'**il comporte une autre joue (50) formée d'une pièce monobloc comprenant deux parties (53, 54) se chevauchant partiellement et articulées entre elles par une zone (55) formant charnière, cette autre joue (50) destinée à établir une continuité de parois entre deux cloisons de fractionnement (15) supportées par les fonds desdits socles, portant des moyens de réception qui s'étendent selon un arc de cercle donné et qui sont destinés à recevoir des moyens de montage de tronçons de couvercle (40) adaptés à fermer des compartiments desdits socles (10) pour permettre la fermeture de l'angle formé entre lesdits socles (10) et d'une partie de chaque couple de compartiments aboutés desdits socles (10) par un seul tronçon de couvercle (40) sans interruption ni arête ou pliure dans ledit angle.

3. Accessoire d'angle selon l'une des revendications 1 ou 2, **caractérisé en ce que** ladite zone (25 ; 55) formant charnière est une zone de faible épaisseur située dans le bord avant (20A ; 50A) de ladite joue (20 ; 50) destiné à établir une continuité de bords entre les bords avant desdits socles.

4. Accessoire d'angle selon l'une des revendications 1 à 3, **caractérisé en ce que** lesdites parties (23, 24) portent sur leur face interne (23A, 21A) tournée vers les socles des moyens de guidage d'une partie par rapport à l'autre.

5. Accessoire d'angle selon la revendication 4, **caractérisé en ce que** lesdits moyens de guidage comprennent, d'une part, une rainure (27) prévue en creux dans ladite face interne (23B) d'une des parties (23) et, d'autre part, une languette (28) portée en saillie de ladite face interne (21 B) de l'autre partie (21), adaptée à s'engager dans ladite rainure (27).

6. Accessoire d'angle selon la revendication 5, **caractérisé en ce que** la rainure (27) et la languette (28) sont agencées de manière que ladite languette (28) est apte à être retenue dans ladite rainure (27) pour maintenir en position lesdites parties l'une par rapport à l'autre.

7. Accessoire d'angle selon l'une des revendications 1 à 6, **caractérisé en ce que** les parties portent sur leur face interne tournée vers les socles des moyens de montage sur lesdits socles.

8. Accessoire d'angle selon la revendication 7, **caractérisé en ce que** lesdits moyens de montage comprennent pour chaque partie une languette d'encliquetage (32 ; 63) destinée à s'accrocher sur un bourrelet d'encliquetage correspondant d'une aile latérale (12, 13) ou d'une cloison de fractionnement (15) d'un des socles (10).

9. Accessoire d'angle selon l'une des revendications 7 ou 8, **caractérisé en ce que** lesdits moyens de montage comprennent pour chaque partie une languette d'engagement (33 ; 64) destinée à s'engager dans une rainure (14A ; 16A) formée à l'extrémité d'un retour d'une aile latérale (12, 13) ou d'une cloison de fractionnement (15) d'un des socles (10).

10. Accessoire d'angle selon l'une quelconque des revendications précédentes, **caractérisé en ce que** lesdits moyens de réception comprennent deux rebords (31 ; 61) associés respectivement aux deux parties (23, 24 ; 53, 54) de la joue (20, 50).

11. Accessoire d'angle selon l'une quelconque des revendications précédentes, **caractérisé en ce que** lesdits moyens de réception comprennent une rainure d'engagement (62) associées respectivement aux deux parties (53, 54) de la joue (50).

12. Accessoire d'angle selon l'une quelconque des revendications précédentes, **caractérisé en ce qu'**une desdites parties de chaque joue (20, 50) est une partie d'extrémité (23 ; 53) destinée à s'engager sur une aile latérale (12, 13) ou sur une cloison de fractionnement (15) d'un desdits socles (10) de façon à couvrir le bord coupé de cette dernière, l'autre desdites partie de chaque joue (20 ; 50) constitue d'une part, une partie d'extrémité (22 ; 52) destinée à s'engager sur une aile latérale (12, 13) ou sur une cloison de fractionnement (15) de l'autre socle (10) de façon à couvrir le bord coupé de cette dernière, et d'autre part, une partie centrale (21 ; 51) chevauchant l'autre partie d'extrémité (23 ; 53) dans une zone (C) avoisinant la bissectrice (B) de l'angle formé entre les bords arrières (20C) de ladite joue (20 ; 50).

13. Accessoire d'angle selon la revendication 12, **caractérisé en ce que** ladite partie centrale (21 ; 51) présente une épaisseur inférieure, de l'ordre de la moitié de celle des parties d'extrémité (22, 23 ; 52, 53).

14. Accessoire d'angle selon l'une quelconque des revendications précédentes, **caractérisé en ce que** chaque joue (20, 50) est réalisée par moulage d'une seule matière plastique.

15. Accessoire d'angle selon l'une quelconque des revendications précédentes, **caractérisé en ce qu**'il comprend deux joues (20) identiques, destinées chacune à établir une continuité de parois entre deux ailes latérales (12 ; 13) desdits socles (10).

16. Accessoire d'angle selon la revendication 15, **caractérisé en ce que** les deux joues identiques sont solidaires d'un fond assurant une continuité de fond entre les fonds desdits socles.

## Claims

1. Angle accessory comprising a cheek (20) which is designed to establish a continuity of walls between two lateral wings (12, 13) of two channel bases (10) which are disposed according to two different orientations, the said cheek (20) supporting receipt means (31) which extend according to a given arc of a circle and are designed to receive means (42) for fitting a portion of cover (40) which is designed to close the said bases (10) in order to permit closure of the angle formed between the said bases (10) and of a section of the latter by a single portion of cover (40) without interruptions or ridges or bends in the said angle, **characterised in that** the said cheek (20) is a part in a single piece comprising two sections (23, 24) which overlap partially and are articulated together by an area (25) which forms a hinge.

2. Angle accessory according to claim 1, **characterised in that** it comprises another cheek (50) which is formed by a part in a single piece comprising two sections (53, 54) which overlap partially and are articulated together by an area (55) which forms a hinge, this other cheek (50) which is designed to establish continuity of walls between two dividing partitions (15) which are supported by the bottoms of the said bases, supporting receipt means which extend according to a given arc of a circle, and are designed to receive means for fitting of sections of cover (40) which are designed to close compartments of the said bases (10) in order to permit closure of the angle formed between the said bases (10) and a section of each pair of abutted compartments of the said bases (10) by a single portion of cover (40) without interruptions or ridges or bends in the said angle.

3. Angle accessory according to claim 1 or claim 2, **characterised in that** the said area (25; 55) which forms a hinge is a thin area which is situated in the front edge (20A; 50A) of the said cheek (20; 50) which is designed to establish continuity of edges between the front edges of the said bases.

4. Angle accessory according to one of claims 1 to 3, **characterised in that** the said sections (23, 24) support on their inner surface (23A, 21A) which faces the bases means for guiding one section relative to the other.

5. Angle accessory according to claim 4, **characterised in that** the said guiding means comprise firstly a groove (27) which is hollowed in the said inner surface (23B) of one of the sections (23), and secondly a tongue (28) which is supported such as to project from the said inner surface (21B) of the other section (21), and is designed to engage in the said groove (27).

6. Angle accessory according to claim 5, **characterised in that** the groove (27) and the tongue (28) are arranged such that the said tongue (28) can be retained in the said groove (27) in order to maintain the said sections in position relative to one another.

7. Angle accessory according to any one of claims 1 to 6, **characterised in that** the sections support on their inner surface which faces the bases means for fitting onto the said bases.

8. Angle accessory according to claim 7, **characterised in that** the said fitting means comprise for each section a snap-on tongue (32; 63) which is designed to be fastened to a corresponding snap-on flange of a lateral wing (12, 13) or of a dividing partition (15) of one of the bases (10).

9. Angle accessory according to claim 7 or claim 8, **characterised in that** the said fitting means comprise for each section an engagement tongue (33; 64) which is designed to engage in a groove (14A; 16A) formed in the end of a return of a lateral wing (12, 13) or of a dividing partition (15) of one of the bases (10).

10. Angle accessory according to any one of the preceding claims, **characterised in that** the said receipt means comprise two shoulders (31; 61) which are associated respectively with the two sections (23, 24; 53, 54) of the cheek (20, 50).

11. Angle accessory according to any one of the preceding claims, **characterised in that** the said receipt means comprise an engagement groove (62) associated respectively with the two sections (53, 54) of the cheek (50).

12. Angle accessory according to any one of the preceding claims, **characterised in that** one of the said sections of each cheek (20, 50) is an end section (23; 53) which is designed to engage on a lateral wing (12, 13) or on a dividing partition (15) of one of the said bases (10) such as to cover the cut edge of the latter, the other one of the said sections of each cheek (20; 50) constitutes firstly an end section (22; 52) which is designed to engage on a lateral wing (12, 13) or on a dividing partition (15) of the other base (10), such as to cover the cut edge of the latter, and secondly a central section (21; 51) which overlaps the other end section (23; 53) in an area (C) in the vicinity of the bisector (B) of the angle formed between the rear edges (20C) of the said cheek (20; 50).

13. Angle accessory according to claim 12, **characterised in that** the said central section (21; 51) has a narrower thickness, of approximately half that of the end sections (22, 23; 52, 53).

14. Angle accessory according to any one of the preceding claims, **characterised in that** each cheek (20, 50) is produced by moulding from a single plastics material.

15. Angle accessory according to any one of the preceding claims, **characterised in that** it comprises two identical cheeks (20), each designed to establish continuity of walls between two lateral wings (12; 13) of the said bases (10).

16. Angle accessory according to claim 15, **characterised in that** the two identical cheeks are integral with a bottom which assures bottom continuity between the bottoms of the said bases.

## Patentansprüche

1. Winkelzubehörelement mit einer Backe (20), die dazu bestimmt ist, für Wandkontinuität zwischen zwei Seitenflanschen (12, 13) von zwei in zwei verschiedenen Ausrichtungen angeordneten Führungskanalsockeln (10) zu sorgen, und Aufnahmemittel (31) trägt, die sich gemäß einem gegebenen Kreisbogen erstrecken und dazu bestimmt sind, Mittel (42) zur Montage eines Deckelabschnitts (40) aufzunehmen, der dazu ausgelegt ist, die Sockel (10) zu schließen, damit der zwischen den Sockeln (10) gebildete Winkel und ein Teil dieser Letzteren mit einem einzigen Deckelabschnitt (40) ohne Unterbrechung und ohne Grat oder Falzung in dem Winkel geschlossen werden können, **dadurch gekennzeichnet, dass** es sich bei der Backe (20) um ein einstückiges Teil handelt, das zwei Teile (23, 24) aufweist, die sich teilweise überlappen und über einen ein Scharnier bildenden Bereich (25) aneinander angelenkt sind.

2. Winkelzubehörelement nach Anspruch 1, **dadurch gekennzeichnet, dass** es eine weitere Backe (50) aufweist, die aus einem einstückigen Teil gebildet ist, das zwei Teile (53, 54) aufweist, die sich teilweise überlappen und über einen ein Scharnier bildenden Bereich (55) aneinander angelenkt sind, wobei diese weitere Backe (50), die dazu bestimmt ist, für Wandkontinuität zwischen zwei von den Böden der Sockel gestützten Trennwänden (15) zu sorgen, Aufnahmemittel trägt, die sich gemäß einem gegebenen Kreisbogen erstrecken und dazu bestimmt sind, Mittel zur Montage von Deckelabschnitten (40) aufzunehmen, die dazu ausgelegt sind, Abteile der Sockel (10) zu schließen, damit der zwischen den Sockeln (10) gebildete Winkel und ein Teil jedes Paars aneinandergefügter Abteile der Sockel (10) mit einem einzigen Deckelabschnitt (40) ohne Unterbrechung und ohne Grat oder Falzung in dem Winkel geschlossen werden können.

3. Winkelzubehörelement nach Anspruch 1 oder 2, **dadurch gekennzeichnet, dass** es sich bei dem ein Scharnier bildenden Bereich (25; 55) um einen dünnen Bereich handelt, der am vorderen Rand (20A; 50A) der Backe (20; 50) angeordnet ist, der dazu bestimmt ist, für Randkontinuität zwischen den vorderen Rändern der Sockel zu sorgen.

4. Winkelzubehörelement nach einem der Ansprüche 1 bis 3, **dadurch gekennzeichnet, dass** die Teile (23, 24) an ihrer zu den Sockeln weisenden Innenfläche (23A, 21A) Führungsmittel eines Teils bezüglich des anderen tragen.

5. Winkelzubehörelement nach Anspruch 4, **dadurch gekennzeichnet, dass** die Führungsmittel einerseits eine als Aushöhlung in der Innenfläche (23B) eines der Teile (23) vorgesehene Nut (27) und andererseits eine Lasche (28), die von der Innenfläche (21B) des anderen Teils (21) vorragend getragen wird und dazu ausgelegt ist, in die Nut (27) einzugreifen, aufweisen.

6. Winkelzubehörelement nach Anspruch 5, **dadurch gekennzeichnet, dass** die Nut (27) und die Lasche (28) so angeordnet sind, dass die Lasche (28) in der Nut (27) gehalten werden kann, um die Teile zueinander in Position zu halten.

7. Winkelzubehörelement nach einem der Ansprüche 1 bis 6, **dadurch gekennzeichnet, dass** die Teile an ihrer zu den Sockeln weisenden Innenfläche Mittel zur Montage auf den Sockeln tragen.

8. Winkelzubehörelement nach Anspruch 7, **dadurch gekennzeichnet, dass** die Montagemittel für jeden Teil eine Einrastlasche (32; 63) aufweisen, die dazu bestimmt ist, sich in einen Einrastwulst einzuhängen, der einem Seitenflansch (12, 13) oder einer Trennwand (15) eines der Sockel (10) entspricht.

9. Winkelzubehörelement nach Anspruch 7 oder 8, **dadurch gekennzeichnet, dass** die Montagemittel für jeden Teil eine Eingreiflasche (33; 64) aufweisen, die dazu bestimmt ist, in eine am Ende eines Rücksprungs eines Seitenflansches (12, 13) oder einer Trennwand (15) eines der Sockel (10) ausgebildete Nut (14A; 16A) einzugreifen.

10. Winkelzubehörelement nach einem der vorhergehenden Ansprüche, **dadurch gekennzeichnet, dass** die Aufnahmemittel zwei Kanten (31; 61) aufweisen, die jeweils den beiden Teilen (23, 24; 53, 54) der Backe (20, 50) zugeordnet sind.

11. Winkelzubehörelement nach einem der vorhergehenden Ansprüche, **dadurch gekennzeichnet, dass** die Aufnahmemittel eine Eingriffsnut (62) aufweisen, die jeweils den beiden Teilen (53, 54) der Backe (50) zugeordnet ist.

12. Winkelzubehörelement nach einem der vorhergehenden Ansprüche, **dadurch gekennzeichnet, dass** es sich bei einem der Teile jeder Backe (20, 50) um einen Endteil (23; 53) handelt, der dazu bestimmt ist, so mit einem Seitenflansch (12, 13) oder mit einer Trennwand (15) eines der Sockel (10) in Eingriff zu kommen, dass er den geschnittenen Rand des bzw. der Letzteren abdeckt, und dass der andere der Teile jeder Backe (20; 50) einerseits einen Endteil (22; 52), der dazu bestimmt ist, so mit einem Seitenflansch (12, 13) oder mit einer Trennwand (15) des anderen Sockels (10) in Eingriff zu kommen, dass er den geschnittenen Rand des bzw. der Letzteren abdeckt, und andererseits einen mittleren Teil (21; 51) darstellt, der den anderen Endteil (23; 53) in einem Bereich (C) überlappt, der der Winkelhalbierenden (B) des zwischen den hinteren Rändern (20C) der Backe (20; 50) gebildeten Winkels benachbart ist.

13. Winkelzubehörelement nach Anspruch 12, **dadurch gekennzeichnet, dass** der mittlere Teil (21; 51) ungefähr halb so dick wie die Endteile (22, 23; 52, 53) ist.

14. Winkelzubehörelement nach einem der vorhergehenden Ansprüche, **dadurch gekennzeichnet, dass** jede Backe (20, 50) durch Formen eines einzigen Kunststoffs hergestellt ist.

15. Winkelzubehörelement nach einem der vorhergehenden Ansprüche, **dadurch gekennzeichnet, dass** es zwei identische Backen (20) aufweist, die jeweils dazu bestimmt sind, für Wandkontinuität zwischen zwei Seitenflanschen (12; 13) der Sockel (10) zu sorgen.

16. Winkelzubehörelement nach Anspruch 15, **dadurch gekennzeichnet, dass** die beiden identischen Backen fest mit einem für Bodenkontinuität zwischen den Böden der Sockel sorgenden Boden verbunden sind.
